# EUROPÄISCHE PATENTSCHRIFT

(11) **EP 1 273 022 B1**
(45) Veröffentlichungstag und Bekanntmachung des Hinweises auf die Patenterteilung: **21.02.2007**
(21) Anmeldenummer: 01940161.1
(22) Anmeldetag: 09.04.2001
(51) Int. Cl.: H01H 71/12

(54) **NIEDERSPANNUNGS-LEISTUNGSSCHALTER MIT EINEM INFORMATIONSSPEICHER**
LOW-VOLTAGE CIRCUIT BREAKER COMPRISING A DATA MEMORY
INTERRUPTEUR DE PUISSANCE BASSE TENSION COMPORTANT UNE MEMOIRE DE DONNEES

(30) Priorität: 12.04.2000 DE 10019092
(43) Veröffentlichungstag der Anmeldung: 08.01.2003
(73) Patentinhaber: SIEMENS AKTIENGESELLSCHAFT, 80333 München (DE)
(72) Erfinder: HOCHGRAEF, Holger, 16845 Ganzer/Wusterhausen (DE); JANKOWIAK, Michael, 12309 Berlin (DE); MIZENER, Jeffery-C., 12247 Berlin (DE); MUSIOL, Aron-Ernst, 12305 Berlin (DE); PANCKE, Andreas, 13507 Berlin (DE); REHAAG, Hans, 16341 Zepernick (DE); SCHILLER, Manfred, 14169 Berlin (DE); TIETZ, Gerhard, 12161 Berlin (DE)
(86) Internationale Anmeldenummer: PCT/DE2001/001489
(87) Internationale Veröffentlichungsnummer: WO 2001/078099

(56) Entgegenhaltungen:
- EP-A- 0 493 272
- WO-A-00/19474
- WO-A-97/08725
- US-A- 5 604 437

## Beschreibung

Die Erfindung betrifft einen Niederspannungs-Leistungsschalter mit einem Informationsspeicher zur Übergabe von Eigenschaftskennwerten des Leistungsschalters und/oder der zugehörigen Stromwandler an einen elektronischen Überstromauslöser sowie mit mindestens einer Verbindungsleitung zwischen Stromwandler(n) und Überstromauslöser.

Leistungsschalter mit einem Informationsspeicher, der unveränderliche Kennwerte des Leistungsschalters wie Typ und Nennstrom sowie Kennwerte der angeschlossenen Stromwandler speichert, sind bekannt. Beim Austausch eines Auslösers werden die Informationen aus dem Informationsspeicher in den eingewechselten Auslöser eingelesen, der dann nicht neu konfiguriert werden muss.

Aus der EP-B 0 493 272 ist ein Leistungsschalter bekannt, der eine fest mit ihm verbundene Adapterkarte aufweist, an die der Auslöser angeschlossen wird. Die Adapterkarte hat Mittel zur Abbildung der Bauart und/oder Nenngröße des Leistungsschalters sowie einen Ausgangssteckverbinder, der mit dem Auslöser verbunden wird.

Aus der WO 97/08 725 ist ein weiterer Leistungsschalter bekannt, dessen Informationsspeicher an einer Gehäuseseite lösbar befestigt ist. Dadurch wird erreicht, dass in die Prüfung eines Überstromauslösers immer auch der Informationsspeicher mit einbezogen wird. Soll nur der Überstromauslöser ausgetauscht werden, so wird der Informationsspeicher von dem Überstromauslöser getrennt und an den neuen Auslöser angefügt, so dass die Eigenschaftskennwerte des Leistungsschalters übernommen werden. Hierbei besteht allerdings die Gefahr, dass der Informationsspeicher im Zuge des Auslöserwechsels verlegt oder verwechselt wird. Außerdem ist die Anordnung durch ihre große Anzahl von Steckverbindungen anfällig.

Zur Minimierung der Steckverbindungen wurde auch bereits vorgeschlagen, den Informationsspeicher als Bestandteil einer zweiteiligen Steckverbindung an der Verbindungsleitung zwischen Stromwandler und Überstromauslöser anzuordnen, dessen zweite Komponente zum Überstromauslöser gehört. Die Unterbringung des Informationsspeichers in einem Steckerteil erfordert jedoch ein speziell ausgebildetes Bauteil, das individuell für jeden Schaltertyp mit Widerständen bestückt werden muss. Die Zahl der speicherbaren Parameter ist hierbei außerdem gering.

Der Erfindung liegt die Aufgabe zugrunde, einen Niederspannungs-Leistungsschalter mit einer verbesserten Funktion des Informationsspeichers und mit einer einfachen Bauweise anzugeben.

Erfindungsgemäß wird die Aufgabe gelöst durch die Merkmale des Anspruchs 1. Zweckmäßige Ausgestaltungen sind Gegenstand der Unteransprüche.

Danach wird als Informationsspeicher ein beschreibbarer elektronischer Speicherbaustein eingesetzt, der in eine der Verbindungsleitungen zwischen Stromwandler (n) und Überstromauslöser eingefügt ist.

Als Speicherbaustein dient beispielsweise ein EEPROM. Zur Vermeidung von störenden Einstreuungen sollte der Speicherbaustein zweckmäßig zum auslöserseitigen Ende der Verbindungsleitung hin angeordnet sein. Der Speicherbaustein erhält ein eigenes Gehäuse, durch das die Verbindungsleitung hindurch verläuft.

Die Lösung hat einmal den Vorteil, dass sich ausreichend viele Parameter speichern lassen. Die Kodierung kann im Zuge der Schalterprüfung erfolgen. Zum anderen sind für den Steckverbinder normale Standardstecker verwendbar. Insgesamt wird die Verbindungsleitung von dem bzw. den Stromwandlern zu einem Standardbauteil in der Schalterfertigung, bei dem im Verlauf der Schalterprüfung die Parameter des zugehörigen Schalters festgelegt werden.

Die Erfindung soll nachstehend anhand eines Ausführungsbeispiels noch näher erläutert werden. In der zugehörigen Zeichnung zeigen
Figur 1 einen Kabelbaum zur Verbindung der Stromwandler eines Leistungsschalters mit dem Überstromauslöser und
Figur 2 die zugehörige Schaltung des Kabelbaums.

In der Figur 3 ist in schematischer Darstellung ein Niederspannungs-Leistungsschalter mit einem Kabelbaum gemäß den Figuren 1 und 2 gezeigt.

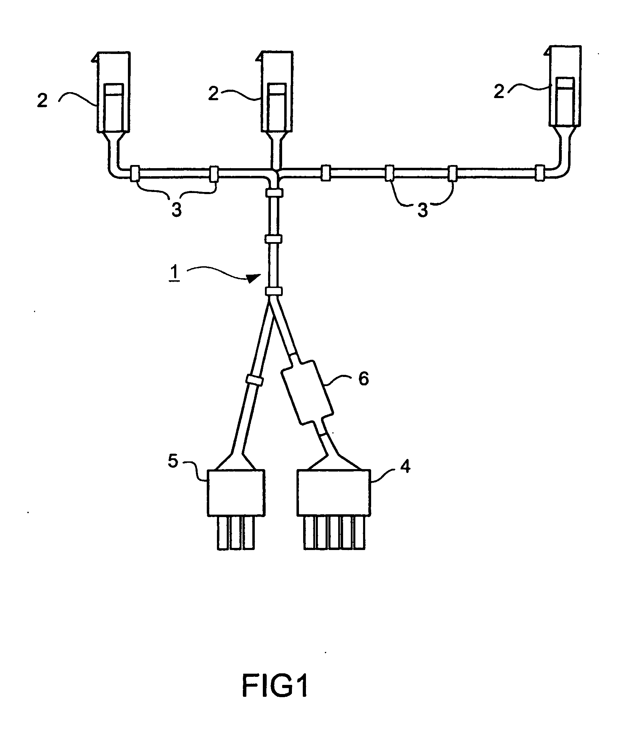

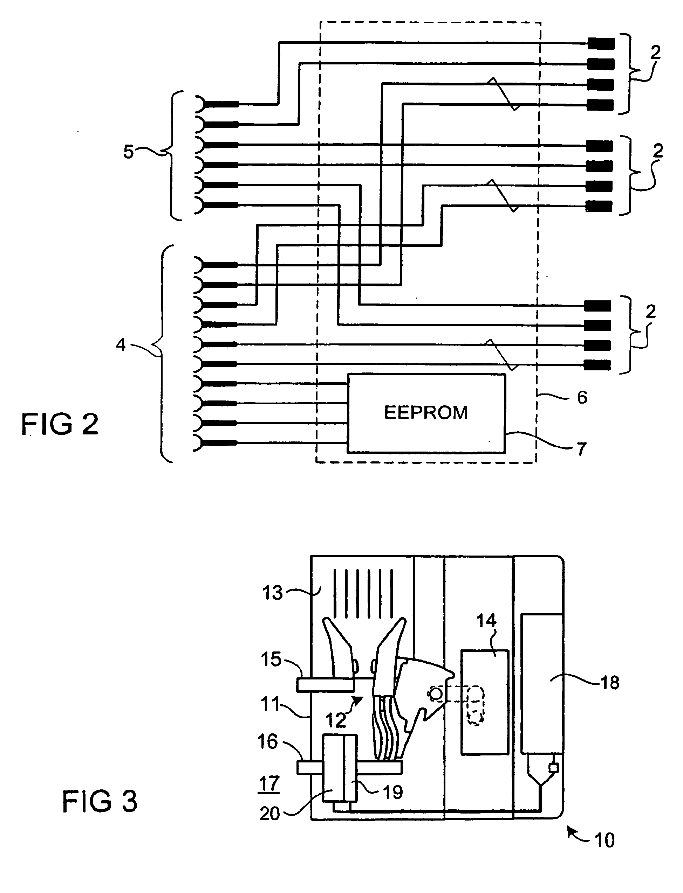

Figur 1 zeigt einen Kabelbaum 1 für die Verbindung eines Überstromauslösers 18 (Figur 3) zu Wandlersätzen 17 (Figur 3). Jeder Wandlersatz 17 besteht dabei in bekannter Weise aus einem Stromwandler 19 und einem Energiewandler 20. Drei Stecker 2 schaffen zum einen die Verbindung zu drei solchen Wandlersätzen 17, die den Messstrom jedes Poles bzw. Schaltkontaktsystems 12 des dreipoligen Leistungsschalters 10 (Figur 3) für dessen Überstromauslöser 18 liefern und zum anderen eine Hilfsenergie für den Betrieb des Überstromauslösers 18 bereitstellen. Die einzelnen Leitungen sind mit Kabelbindern 3 zum Kabelbaum 1 verbunden. Die anderen beiden Enden des Kabelbaumes 1 tragen Steckverbinder 4 und 5 für die Verbindung mit dem Überstromauslöser 18, einmal für den Messstrom und zum anderen für die Stromversorgung. In den Verlauf der Messleitung eingefügt ist ein Gehäuse 6, in dem ein EEPROM 7 als Informationsspeicher für die Kennwerte des Leistungsschalters 10 und der Stromwandler 19 bzw. des gesamten Wandlersatzes 17 untergebracht ist.

Figur 2 zeigt den Leitungsverlauf innerhalb des Kabelbaumes 1 und des Gehäuses 6. Jeweils zwei Leitungen einer Phase dienen zur Hin- und Rückleitung des Versorgungsstromes und jeweils zwei verdrillte Leitungen zur Hin- und Rückleitung des Messstromes. Die Verdrillung ist in der Figur 2 durch eine gezackte Linie kenntlich gemacht. Die Leitungen durchqueren das Gehäuse 6, in dem sich das EEPROM 7 befindet. Im vorliegenden Fall handelt es sich um ein Vierdrahtelement; es sind als EEPROM's jedoch auch Zweidrahtelemente in der Bauform von Knopfzellen erhältlich, mit denen sich eine weitere Minimierung der Steckkontaktstellen ergeben würde.

In der Figur 3 ist die Anwendung des beschriebenen Kabelbaumes 1 bei einem Niederspannungs-Leistungsschalter 10 veranschaulicht. In bekannter Weise besitzt der Leistungsschalter 10 ein Gehäuse 11, in dem für jeden Pol ein Schaltkontaktsystem 12 mit zugehöriger Löschkammer 13 und eine Antriebvorrichtung 14 zur gemeinsamen Betätigung aller vorhandenen Schaltkontaktsysteme 12 untergebracht sind. Jedes Schaltkontaktsystem 12 weist eine obere Anschlussschiene 15 und eine untere Anschlussschiene 16 auf, um den Leistungsschalter 10 mit einem Stromkreis zu verbinden. Jeder unteren Anschlussschiene 16 ist ein Wandlersatz 17 zugeordnet, der den über das zugehörige Schaltkontaktsytem 12 fließenden Strom erfasst und eine Hilfsenergie zum Betrieb eines elektronischen Überstromauslösers 18 bereitstellt. Wie bereits erwähnt, umfasst hierzu jeder Wandlersatz 17 einen Stromwandler 19 sowie einen Energiewandler 20.

Die Anschlussschienen 15 und 16 sowie die Wandlersätze 17 befinden sich an der Rückseite des Gehäuses 11, während der elektronische Überstromauslöser 18 an der gegenüberliegenden Frontseite des Gehäuses 11 angeordnet ist. Zur Verbindung der Wandlersätze 17 mit dem Überstromauslöser 18 ist der Kabelbaum 1 im unteren Bereich des Gehäuses 11 in geeigneter Weise verlegt. Wie man erkennt, befindet sich das Gehäuse 6 für den Speicherbaustein nahe dem Überstromauslöser 18.

## Patentansprüche

1. Niederspannungs-Leistungsschalter (10) mit einem Informationsspeicher zur Übergabe von Eigenschaftskennwerten des Leistungsschalters (10) und/oder der zugehörigen Stromwandler (17) an einen elektronischen Überstromauslöser (18) sowie mit mindestens einer Verbindungsleitung zwischen Stromwandler(n) (17) und Überstromauslöser (18),
**dadurch gekennzeichnet,**
**dass** der Informationsspeicher ein beschreibbarer elektronischer Speicherbaustein ist, der in eine der Verbindungsleitungen (1) zwischen Stromwandler(n) (17) und Überstromauslöser (18) eingefügt ist.

2. Niederspannungs-Leistungsschalter nach Anspruch 1,
**dadurch gekennzeichnet,**
**dass** der Speicherbaustein ein EEPROM (7) ist.

3. Niederspannungs-Leistungsschalter nach Anspruch 1 oder 2,
**dadurch gekennzeichnet,**
**dass** der Speicherbaustein am auslöserseitigen Ende der Verbindungsleitung (1) eingefügt ist.

4. Niederspannungs-Leistungsschalter nach einem der vorhergehenden Ansprüche,
**dadurch gekennzeichnet,**
**dass** der Speicherbaustein in einem Gehäuse (6) untergebracht ist.

5. Niederspannungs-Leistungsschalter nach einem der Ansprüche 2 bis 4, **dadurch gekennzeichnet,**
**dass** der Speicherbaustein ein Vierdrahtelement ist.

6. Niederspannungs-Leistungsschalter nach einem der Ansprüche 2 bis 4, **dadurch gekennzeichnet,**
**dass** der Speicherbaustein ein Zweidrahtelement ist.

## Claims

1. Low-voltage circuit breaker (10) having an information memory for passing characteristic values of the circuit breaker (10) and/or of the associated current transformer (17) to an electronic overcurrent release (18), and having at least one connection line between the current transformer or transformers (17) and the overcurrent release (18),
**characterized in that**
the information memory is an electronic memory module which can be written to and is inserted into one of the connection lines (1) between the current transformer or transformers (17) and the overcurrent release (18).

2. Low-voltage circuit breaker according to claim 1,
**characterized in that**
the memory module is an EEPROM (7).

3. Low-voltage circuit breaker according to claim 1 or 2,
**characterized in that**
the memory module is inserted at the release-side end of the connection line (1).

4. Low-voltage circuit breaker according to one of the preceding claims,
**characterized in that**
the memory module is accommodated in a housing (6).

5. Low-voltage circuit breaker according to one of claims 1 to 4,
**characterized in that**
the memory module is a four-wire element.

6. Low-voltage circuit breaker according to one of claims 2 to 4,
**characterized in that**
the memory module is a two-wire element.

## Revendications

1. Disjoncteur (10) basse tension, ayant une mémoire d'information pour la transmission de valeurs caractéristiques de propriétés du disjoncteur (10) et/ ou du convertisseur (17) de courant associé à un déclencheur 18 électronique en cas de surintensité, ainsi qu'au moins une ligne de liaison entre le ou les convertisseurs (17) de courant et le déclencheur 18 en cas de surintensité
**caractérisé**
**en ce que** la mémoire d'information est un module de mémoire électronique, dans lequel on peut écrire et qui est inséré dans l'une des lignes (1) de liaison comprise entre le ou les convertisseurs (7) de courant et le déclencheur (18) en cas de surintensité.

2. Disjoncteur basse tension suivant la revendication 1, **caractérisé en ce que** le module de mémoire est une EE PROM (7).

3. Disjoncteur basse tension suivant la revendication 1 ou 2, **caractérisé en ce que** le module de mémoire est inséré à l'extrémité de la ligne (1) de liaison qui se trouve du côté du déclencheur.

4. Disjoncteur basse tension suivant l'une des revendications précédentes, **caractérisé en ce que** le module de mémoire est logé dans un boîtier (6).

5. Disjoncteur basse tension suivant l'une des revendications de 1 à 4, **caractérisé en ce que** le module de mémoire est un élément à quatre fils.

6. Disjoncteur basse tension suivant l'une des revendications de 1 à 4, **caractérisé en ce que** le module de mémoire est un élément à deux fils.
